# EUROPEAN PATENT APPLICATION

(11) **EP 4 764 255 A1**
(43) Date of publication of application: **24.06.2026**
(21) Application number: 24220760.3
(22) Date of filing: 17.12.2024
(51) Int. Cl.: F16H 55/14, B60K 17/28

(54) **APPARATUS FOR TRANSMITTING POWER FROM A POWER GENERATING DEVICE HAVING HIGH TORQUE IRREGULARITIES TO AN ELECTRICAL MACHINE, AND MOTOR VEHICLE COMPRISING SUCH APPARATUS**

(71) Applicant: VOLVO TRUCK CORPORATION, 405 08 Göteborg (SE)
(72) Inventor: EKSTRÖM, Fredrik, 451 91 UDDEVALLA (SE); LUNDBERG, Magnus, 427 50 BILLDAL (SE); KEMI, Leif, 41875 GÖTEBORG (SE)
(74) Representative: Lavoix

(57) **Abstract**

Apparatus (1) for transmitting power from a power generating device (100) to an electrical machine (110) suitable to be installed onboard a motor vehicle, the apparatus (1) comprising:
- a power take-off, PTO, device (3) which comprises a gear wheel (3) which is suitable to receive rotary power from the power generating device (100);
- a power transmission (4) which is suitable to receive rotary power from said gear wheel (3) and to transfer at least part of the received rotary power to the electrical machine (110);
- a decoupler (10) that is interconnected between and transfers rotary power from the gear wheel (3) in input to the power transmission (4), wherein the decoupler (10) is at least partially fitted inside said gear wheel (3) and reduces the torque amplitude transmitted in input to the power transmission (4) relative to the torque amplitude received in input by the gear wheel (3) from the power generating device (100).

## Description

### TECHNICAL FIELD

The disclosure relates generally to the field of power generation onboard motor vehicles. In particular aspects, the disclosure relates to an apparatus for transmitting power from a power generation device having in particular high torque irregularities, such as for example an internal combustion engine, steam machines, electric motors etc., to an electrical machine, and to a motor vehicle comprising such apparatus. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The demand of electric power onboard motor vehicles, in particular large vehicles, such as trucks, harvesters and tractors, etc., has increased significantly over the years.

To cope with this demand, electric power has been generated usually by one or more alternators driven by the belt drive of the onboard internal combustion engine.

However, for some applications, more alternators or larger alternators can not be mounted on the belt drive and hence another driving source must be used, such as the engine power take-off (PTO) of trucks.

This solution imposes some challenges since the rotational speed of a typical electrical machine is by far larger than that of the internal combustion engine; as a consequence, a gearbox or transmission mechanism for properly transferring the speed between the internal combustion engine and the electrical machine is needed.

Furthermore, such gearboxes transfer the inertia of the electrical machine and the incorporated elements of the gearbox, such as gears and axles, by the square of the gear ratio. This results in a high inertia, which may cause stresses on the elements of the transmission since the torque provided by internal combustion engine is highly dynamic and irregular following the combustion frequency.

### SUMMARY

According to a first aspect of the disclosure, there is provided an apparatus for transmitting power from a power generating device to an electrical machine suitable to be installed onboard a motor vehicle, the apparatus comprising at least:
- a power take-off, PTO, device which comprises a gear wheel which is suitable to receive rotary power from the power generating device;
- a power transmission which is suitable to receive rotary power from said gear wheel and to transfer at least part of the received rotary power to the electrical machine;
- a decoupler that is interconnected between and transfers rotary power from the gear wheel in input to the power transmission, wherein the decoupler is at least partially fitted inside said gear wheel and reduces the torque amplitude transmitted in input to the power transmission relative to the torque amplitude received in input by the gear wheel from the power generating device. The first aspect of the disclosure may seek to suitably cope with high torque irregularities of power generating device, such as for example internal combustion engines, and mechanical inertia between such power generating device and an electrical machine receiving power therefrom. A technical benefit may include reducing the stresses exerted on various components involved in the chain of power transmission, such as gears and axles, according to a quite compact structure.

Optionally in some examples, including in at least one preferred example, the decoupler is substantially completely fitted inside said gear wheel. A technical benefit may include having a very compact structure.

Optionally in some examples, including in at least one preferred example, the power transmission comprises a planetary gear set suitable to transmit to the electrical machine at least part of the rotary power received from the gear wheel via the decoupler, wherein the planetary gear set comprises at least a planet carrier rotatably mounted around a rotation axis, and wherein the decoupler is mechanically fixed to and rotates substantially synchronously with the planet carrier. A technical benefit may include realizing an integrated and effective structure, thereby making the complete apparatus very compact and thus avoiding large packaging conflicts in the foreseen applications onboard of motor vehicles.

Optionally in some examples, including in at least one preferred example, the decoupler comprises a flange-shaped element which is fitted over an outer surface of and is solidly rotating with the planet carrier around the rotation axis.

Optionally in some examples, including in at least one preferred example, the decoupler comprises a further element which is interposed between the flange-shaped element and the gear wheel.

Optionally in some examples, including in at least one preferred example, the further element comprises or is formed by a disc-shaped body which is mounted over a portion of the flange-shaped element and is partially inserted within the gear wheel.

Optionally in some examples, including in at least one preferred example, the planetary gear set further includes:
- a sun gear that is suitable to be coaxially secured to an output shaft suitable to transmit power to the electrical machine;
- a ring gear secured to a housing of the power transmission;
- one or more planetary gears placed inside the planet carrier interposed between and meshing with the sun gear and the ring gear.

A technical benefit of the above structure may include realizing an integrated, simple and effective apparatus,

Optionally in some examples, including in at least one preferred example, the decoupler comprises at least one torsional spring having one end connected to the gear wheel and the opposite end connected to an input part of the power transmission. A technical benefit may include realizing an integrated, simple and effective structure, thereby making the complete apparatus very compact and thus avoiding large packaging conflicts in the foreseen applications onboard of motor vehicles.

Optionally in some examples, including in at least one preferred example, the at least one torsional spring has a stiffness which gives a torsional system resonance frequency lower than the main rotational excitation frequency in the system. A technical benefit may include realizing an integrated structure capable of smoothing torque irregularities in a very effective way.

Optionally in some examples, including in at least one preferred example, the decoupler comprises a torsional damper having one end connected to the gear wheel and the opposite end connected to an input part of the power transmission. A technical benefit may include realizing an integrated, simple and effective structure, thereby making the complete apparatus very compact and thus avoiding large packaging conflicts in the foreseen applications onboard of motor vehicles.

Optionally in some examples, including in at least one preferred example, the decoupler comprises or is constituted by a rubber element having an outer part connected to an inner surface of the gear wheel and an inner part fitted over an input part of the power transmission. A technical benefit may include realizing an integrated, simple and effective structure, thereby making the complete apparatus very compact and thus avoiding large packaging conflicts in the foreseen applications onboard of motor vehicles.

Optionally in some examples, including in at least one preferred example, the decoupler comprises a first disc mechanically attached to the gear wheel and a second disc mechanically attached to an input part of the power transmission, wherein the first disc and the second disc are positioned inside a cavity at least partially filled with a viscous fluid. A technical benefit may include realizing an integrated, simple and effective structure, thereby making the complete apparatus very compact and thus avoiding large packaging conflicts in the foreseen applications onboard of motor vehicles.

Optionally in some examples, including in at least one preferred example, the power transmission comprises an input splined shaft, and wherein the decoupler comprises a first part fixed to and solidly rotating with the gear wheel, and a sliding member which is coaxially mounted around and mechanically connected to the splined shaft, wherein the sliding member and the first part mechanically interface to each other along an interface which is configured to keep coupled together the sliding member and the first part when rotating around a reference axis, while allowing the sliding member to slide along the reference axis relative to the first part. A technical benefit may include realizing an integrated, simple and effective structure, thereby making the complete apparatus very compact and thus avoiding large packaging conflicts in the foreseen applications onboard of motor vehicles.

Optionally in some examples, including in at least one preferred example, a spring is mounted over the splined shaft and opposes the axial movement of the sliding member along the reference axis away from the fixed part. In this way, the dampening movement is suitably controlled.

According to a second aspect of the disclosure, there is provided a motor vehicle comprising an apparatus 1 as above indicated, and as better defined in one or more of the appended claims.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a block diagram schematically illustrating an apparatus for transmitting power from a power generating device to an electrical machine suitable to be installed onboard a motor vehicle, according to an example.
**FIG. 2** is an exploded view of an apparatus for transmitting power from a power generating device to an electrical machine suitable to be installed onboard a motor vehicle, according to an example.
**FIG. 3** shows the apparatus of FIG. 2 with the various components assembled.
**FIG. 4** is a side cross section of the apparatus of FIG. 2 and FIG. 3.
**FIG. 5** schematically shows an example of a decoupler which can be used in an apparatus according to the present disclosure.
**FIG. 6** schematically shows another example of a decoupler which can be used in an apparatus according to the present disclosure.
**FIG. 7** schematically shows another example of a decoupler which can be used in an apparatus according to the present disclosure.
**FIG. 8** schematically shows another example of a decoupler which can be used in an apparatus according to the present disclosure.

### DETAILED DESCRIPTION

The detailed description set forth below provides information and examples of the disclosed technology with sufficient detail to enable those skilled in the art to practice the disclosure.

The use of transmission mechanisms, such as gearboxes, for transferring power from a power generating device having high torque irregularities, such an internal combustion engine, to an electrical machine, entails some technical challenges due to the different rotational speeds between the electrical machine and the power generating device, and mechanical inertia that may result in stresses exerted on various components involved in the chain of power transmission, such as gears and axles.

The apparatus according to the disclosure comprises a decoupler which allows a proper transmission of rotary power mitigating at least in part one or more of the above issues.

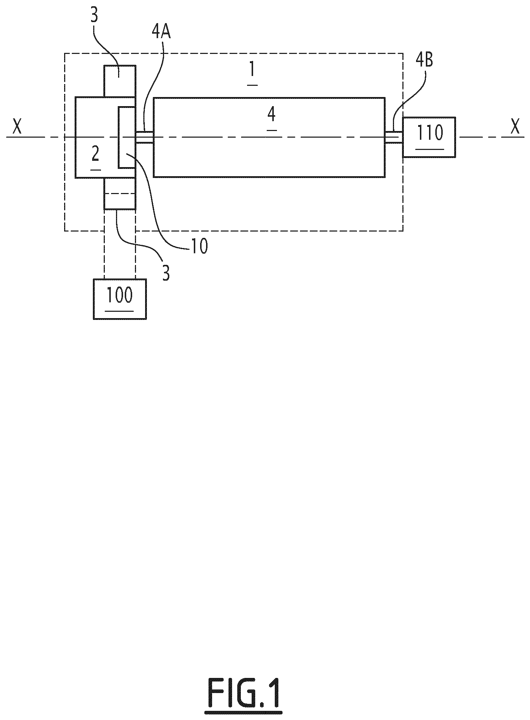

FIG. 1 schematically illustrates an apparatus 1, suitable to be installed onboard a motor vehicle, which is configured for transmitting power from an onboard power generating device to an onboard electrical machine, schematically illustrated only in FIG. 1 by the reference numbers 100 and 110, respectively.

For instance, the onboard power generating device 100 can be an internal combustion engine.

Clearly, the power generating device 100 can be any other suitable power generating device, such as an electric motor, etc.

The onboard electrical machine 110 can be any type of rotating electrical machine used onboard of motor vehicles, suitable for example to generate electric power for feeding one or more onboard loads.

As illustrated in FIG. 1, the apparatus 1 comprises an onboard power take-off, PTO, device 2 which includes a gear wheel 3 suitable to receive rotary power from the power generating device 100.

For example, as illustrated in FIG. 1 and 5 to 8, the gear wheel 3 is mounted rotating around a reference axis X, and is suitable to engage with a driving gear, schematically represented in FIG. 1 by the reference number 120, which is part of or is connected to a power output shaft of the power generating device 100.

The apparatus 1 comprises also:
- a power transmission, indicated by the overall reference number 4, which is suitable to receive rotary power from the gear wheel 3 and to transfer at least part of the received rotary power to the electrical machine 110; and
- a decoupler, indicated by the overall reference number 10, that is interconnected between the gear wheel 3 and the power transmission 4 and is adapted to transfer rotary power from the gear wheel 3 in input to the power transmission 4.

The decoupler 10 is at least partially fitted inside the gear wheel 3 and is configured to reduce the amplitude of the torque transmitted in input to the power transmission 4 relative to the torque amplitude received in input by the gear wheel 3.

The decoupler 10 also reduces the rotational speed variations at the input of the power transmission 4 relative to rotational speed received in input by the gear wheel 3.

The power transmission 4 can be any suitable type of mechanical power transmission capable of obtaining, depending of the applications, the desired gear ratio, and comprises:
- an input part, schematically represented in Fig. 1 by the reference number 4A, which is suitable to be operatively connected to the decoupler 10 and to receive from it rotary power, wherein the amplitude of the torque received at the input part 4A is reduced with respect to the torque amplitude received in input by the gear wheel 3 itself;
- an output part, schematically represented in Fig. 1 by the reference number 4B, which outputs at least part of the received rotary power to the electrical machine 110.

Depending on the applications, the input part 4A and the output part 4B can be of any suitable shape.

For example, the input part 4A can be a shaft or a gear wheel connected to or mating with an associated part of the decoupler 10.

Likewise, the output part 4B can be for instance a shaft or a gear wheel connected to or mating with an associated input part of the electrical machine 110.

In one possible example, the decoupler 10 is fitted substantially completely inside the gear wheel 3, and in particular mechanically fixed thereto.

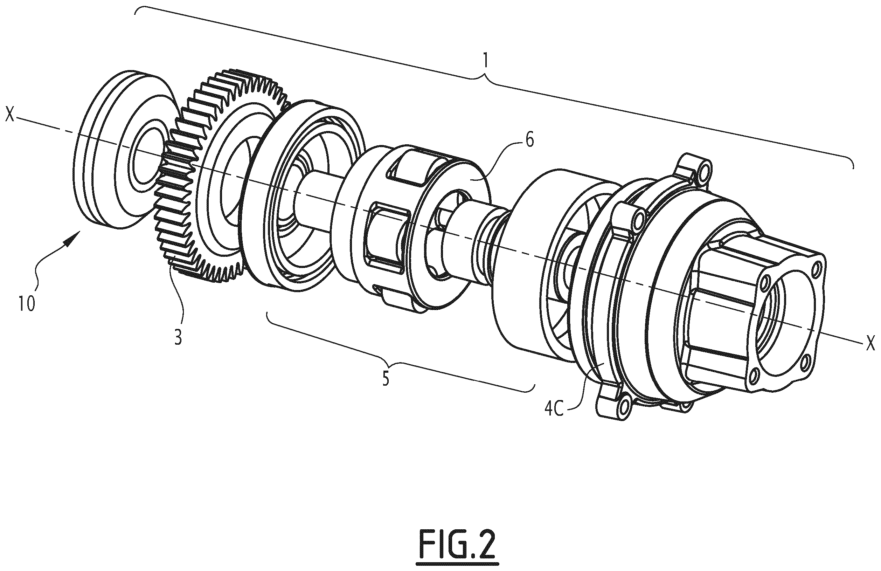

FIG. 2 to 4 illustrate a possible example of an apparatus 1 according to the disclosure, which includes a possible example of a decoupler 10 which is operatively coupled to a gear wheel 3 of a PTO device 2, and a possible example of a power transmission 4 coupled at its input part 4A to the decoupler 10.

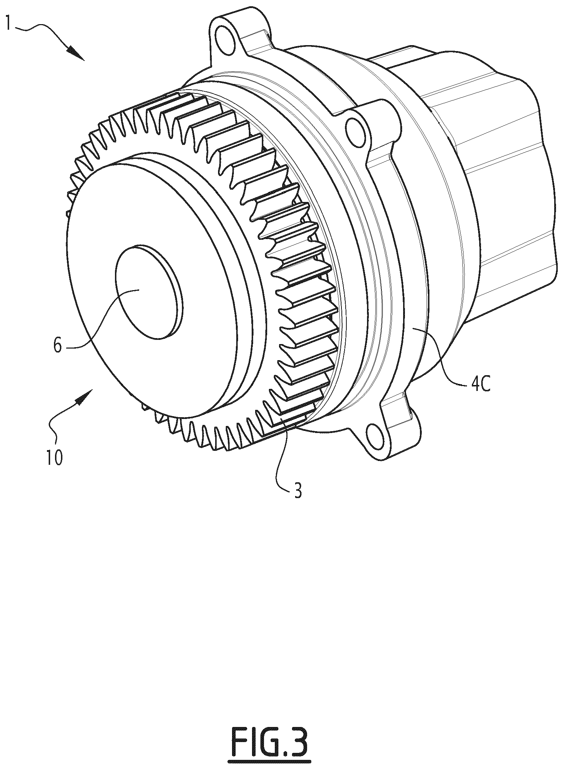

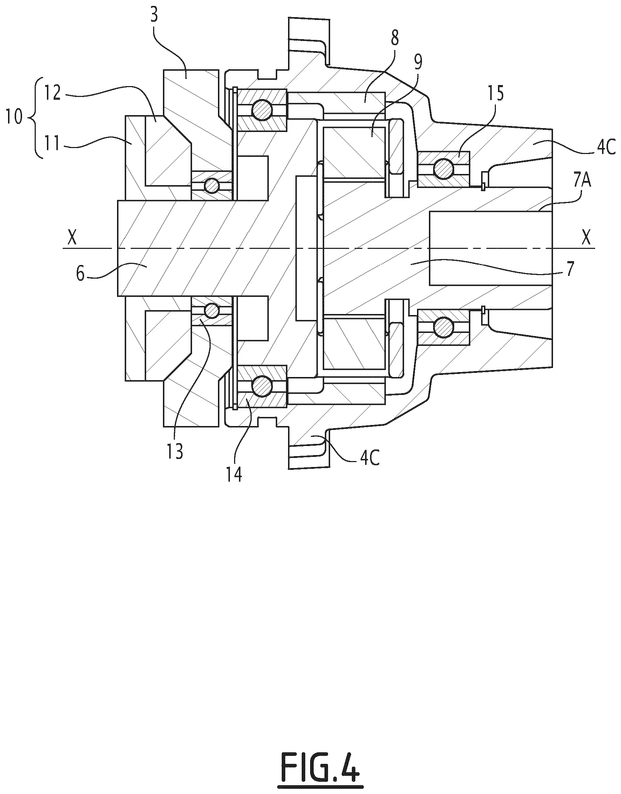

As illustrated, the exemplary power transmission mechanism 4 depicted comprises a housing, indicated in figures 3 and 4 by the reference number 4C, and a planetary gear set, indicated in FIG. 2 by the overall reference number 5, which is at least partially accommodated inside the housing 4C.

The planetary gear set 5 is configured to transmit to the electrical machine 110 at least part of the rotary power received from the gear wheel 3 via the decoupler 10, and for instance comprises, among the others, at least a planet carrier 6 which is rotatably mounted around the rotation axis X.

In one possible example, as illustrated in FIG. 4, the decoupler 10 is partially fitted inside the gear wheel 3, and is mechanically fixed to and rotates substantially synchronously with the planet carrier 6.

In the example illustrated in Fig. 2 to 4, the planetary gear set 5 further comprises a sun gear 7 whose right end part 7A (with respect to a frontal view of FIG. 3) represents substantially the output part 4B of the power transmission 4; the sun gear 7 is suitable to be mounted with its end part 7A coaxially secured to an output shaft part of or connected to the electrical machine 110.

The exemplary planetary gear set 5 illustrated further comprises:
- a ring gear 8 which is fixed to the inner side of the housing 4C; and
- one or more planetary gears 9 which are placed inside the planet carrier 6 and are interposed between and mesh with the sun gear 7 and the ring gear 8.

In the example of Fig. 2 to 4, the decoupler 10 comprises two parts, namely a first part mechanically attached to the input shaft of the power transmission 4, represented in the example of FIG. 2 to 4 by the left end of the planet carrier 6, and a second part mechanically attached to the gear wheel 3.

The torque transfer device from the decoupler does not need to be a shaft, there could be examples where for example a gear could be mounted directly to the decoupler.

The two parts are operatively coupled and interface to each other so that a dampening effect is generated between them thereby allowing to transmit to the planet carrier 6 a torque whose amplitude is reduced with respect to the torque amplitude received in input by the gear wheel 3.

For instance, the two parts may be housed in a suitable casing containing a viscous fluid, such as oil, which generates a dampening effect between the two parts.

In particular, in the example illustrated, the decoupler 10 comprises a flange-shaped element 11 which is fitted over an outer surface of and is solidly rotating with the planet carrier 6 around the rotation axis X.

According to one example, the decoupler 10 illustrated in FIG. 2 to 4 comprises a further element 12 which is for example interposed between the flange-shaped element 11 and the gear wheel 3.

For instance, the further element 12 comprises or is formed by a disc-shaped body which is mounted over a portion of the flange-shaped element 11 and is partially inserted within the gear wheel 3.

One or more bearings 13, 14 and 15 are provided in order to allow the relative rotations of the various components involved in the transmission of power.

As above indicated the power transmission 4 can be of any suitable type other than the exemplary one depicted in FIG. 2 to 4.

Likewise, also the decoupler 10 can be realized according to examples different from that depicted in FIG. 2-4.

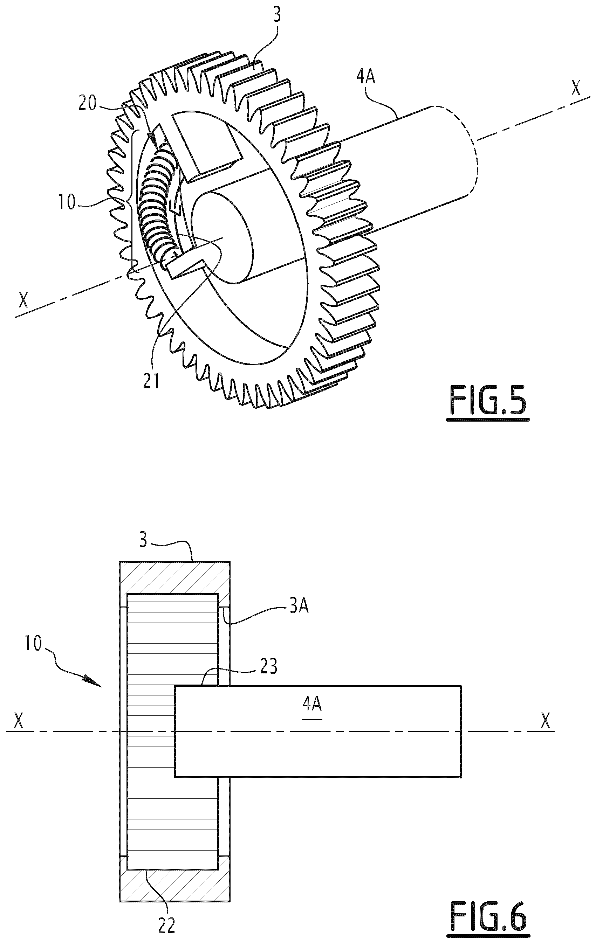

To this regard, FIG. 5 to 8 schematically shows some examples of a decoupler 10 which can be used in an apparatus 1 according to the present disclosure.

In particular, according to the example illustrated in FIG. 5, the decoupler 10 comprises at least one torsional spring 20 having one end connected to the gear wheel 3 and the opposite end connected to an input part 4A of the power transmission 4.

In particular, the at least one torsional spring 20 is configured so that its stiffness results in a torsional system resonance frequency lower than the main rotational excitation frequency in the system. The main rotational excitation frequency to which it is referred to is the main excitation frequency of the source to the apparatus, i.e. frequencies caused by the combustion engine (torque irregularity).

In one possible example, illustrated in FIG. 5, the exemplary decoupler 10 comprises, in addition or in alternative to the torsional spring20, a torsional damper 21 having one end connected to the gear wheel 3 and the opposite end connected to the input shaft 4A of the power transmission 4.

In one possible example, schematically illustrated in FIG. 6, the decoupler 10 comprises or is constituted by a rubber element having an outer part 22 connected to an inner part 3A of the gear wheel 3, and an inner part 23 fitted over an input part 4A, e.g. an input shaft, of the power transmission 4.

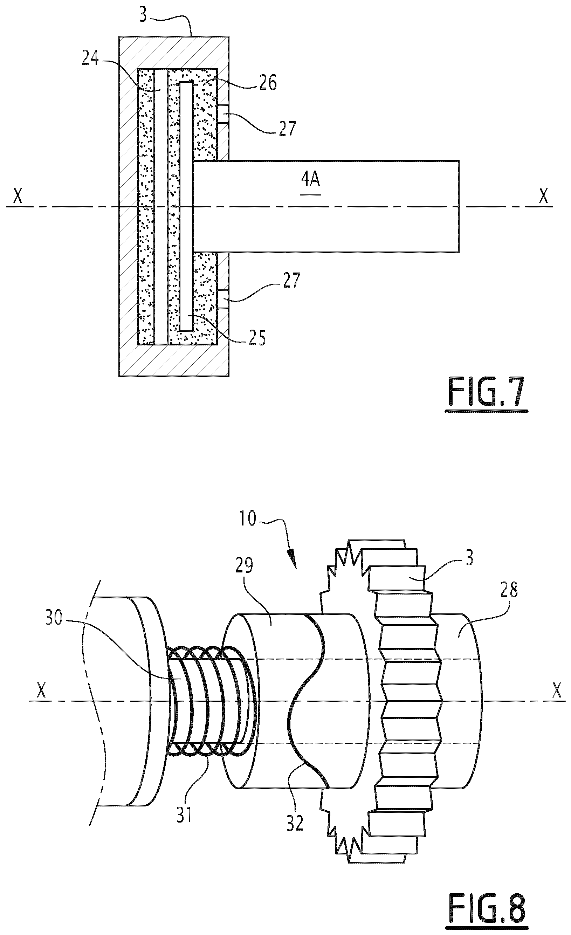

In one possible example, schematically illustrated in FIG. 7, the decoupler 10 comprises a first disc 24 mechanically attached to the gear wheel 3 and a second disc 25 mechanically attached to an input part 4A, e.g. an input shaft, of the power transmission 4.

The first and second discs 24, 25 are positioned inside a cavity 26 at least partially filled with a viscous fluid, such as oil.

In this way, due to the viscous force of the oil between the discs, torque is transmitted from the gear wheel 3 to the input shaft 4 with a dampening effect.

The viscous fluid can be circulated inside the cavity 26 via a circuit 27.

In one possible example, schematically illustrated in FIG. 8, the decoupler 10 comprises a first part 28 fixed to and solidly rotating with the gear wheel 3, and a sliding member 29.

According to this example, the input part 4A of the power transmission 4 comprises a splined shaft 30 around which there is wound a spring 31.

The sliding member 29 is coaxially mounted around and mechanically connected to a splined shaft 30; further, the sliding member 29 and the first part 28 mechanically interface to each other along an interface 32 which is configured to keep coupled together the sliding member 29 and the first part 28 when rotating around the rotational axis X, while allowing the sliding member 29 to slide along the axis X relative to the first part 28.

In practice, during operations, the sliding member 29 can rotate around the rotation axis X together with the first part 28, the gear wheel 3, and the splined shaft 30, and the sliding member 29 can slide along the spline(s) of the shaft 30 thereby decoupling irregularities of the power generating device 100 from the motion of the electrical machine 110 on the other side of the power transmission 4.

The spring 31, for example a compression spring, which is mounted around the splined shaft 30, for instance between the sliding member 29 and an abutment part (only partially depicted in FIG. 8), is configured to oppose or in any case limit the axial movement of the sliding member 29 along the reference axis X when the sliding member 29 moves away from the fixed part 28 and to push the sliding member 29 back towards the first part 28.

In the examples illustrated in FIG. 5 to 8, the input part 4A of the power transmission 4 is depicted as a shaft for the sake of ease of description; for example, with regard to the power transmission 4 depicted in the FIG. 2 to 4, such shaft may be a shaft solidly connected to and synchronously rotating with the planet carrier 6 or be constituted by the planetary carrier 6.

The present disclosure encompasses the following examples.

Example 1: an apparatus 1 for transmitting power from a power generating device 100 to an electrical machine 110 suitable to be installed onboard a motor vehicle, the apparatus 1 comprising at least:
- a power take-off, PTO, device 2 which comprises a gear wheel 3 which is suitable to receive rotary power from the power generating device 100;
- a power transmission 4 which is suitable to receive rotary power from said gear wheel 3 and to transfer at least part of the received rotary power to the electrical machine 110;
- a decoupler 10 that is interconnected between and transfers rotary power from the gear wheel 3 in input to the power transmission 4, wherein the decoupler 10 is at least partially fitted inside said gear wheel 3 and reduces the torque amplitude transmitted in input to the power transmission 4 relative to the torque amplitude received in input by the gear wheel 3 from the power generating device 100.

Example 2: The apparatus 1 of example 1, wherein the decoupler 10 is substantially completely fitted inside said gear wheel 3.

Example 3: The apparatus 1 of any of examples 1-2, wherein the power transmission 4 comprises a planetary gear set 5 suitable to transmit to the electrical machine 110 at least part of the rotary power received from the gear wheel 3 via the decoupler 10, wherein the planetary gear set 5 comprises at least a planet carrier 6 rotatably mounted around a rotation axis X, and wherein the decoupler 10 is mechanically fixed to and rotates substantially synchronously with the planet carrier 6.

Example 4: The apparatus 1 of any of examples 1-3, wherein the decoupler 10 comprises at least one torsional spring 20 having one end connected to the gear wheel 3 and the opposite end connected to an input part 4A of the power transmission 4.

Example 5: The apparatus 1 of example 4, wherein the at least one torsional spring 20 has a stiffness which gives a torsional system resonance frequency lower than the main rotational excitation frequency in the system.

Example 6: The apparatus 1 of any of examples 1-5, wherein the decoupler 10 comprises a torsional damper 21 having one end connected to the gear wheel 3 and the opposite end connected to the input shaft 4A of the power transmission 4.

Example 7: The apparatus 1 of any of examples 1-3, wherein the decoupler 10 comprises or is constituted by a rubber element having an outer part (22) connected to an inner surface 3A of the gear wheel (3) and an inner part (23) fitted over an input part 4A of the power transmission 4.

Example 8: The apparatus 1 of any of examples 1-3, wherein the decoupler 10 comprises a first disc 24 mechanically attached to the gear wheel 3 and a second disc 25 mechanically attached to an input part 4A of the power transmission 4, wherein the first disc 24 and the second disc 25 are positioned inside a cavity 26 at least partially filled with a viscous fluid 27.

Example 9: The apparatus 1 of any of examples 1-3, wherein the power transmission 4 comprises an input splined shaft 4A, and wherein the decoupler 10 comprises a first part 28 fixed to and solidly rotating with the gear wheel 3, and a sliding member 28 which is coaxially mounted around and mechanically connected to the splined shaft 29, wherein the sliding member 29 and the first part 28 mechanically interface to each other along an interface 32 which is configured to keep coupled together the sliding member 29 and the first part 28 when rotating around a reference axis X, while allowing the sliding member 29 to slide along the reference axis X relative to the first part 28.

Example 10: The apparatus 1 of example 9, wherein it further comprises a spring 31 which is mounted over the splined shaft 29 and opposes the axial movement of the sliding member 29 along the reference axis X away from the fixed part 28.

Example 11: The apparatus 1 of example 3, wherein the decoupler 10 comprises a flange-shaped element (11) which is fitted over an outer surface of and is solidly rotating with the planet carrier (6) around the rotation axis (X).

Example 12: The apparatus 1 of example 11, wherein the decoupler 10 comprises a further element 12 which is interposed between the flange-shaped element 11 and the gear wheel 3.

Example 13: The apparatus 1 of example 12, wherein the further element 12 comprises or is formed by a disc-shaped body which is mounted over a portion of the flange-shaped element 11 and is partially inserted within the gear wheel 3.

Example 14: The apparatus 1 of example 3, wherein the planetary gear set 5 further includes:
- a sun gear 7 that is suitable to be coaxially secured to an output shaft suitable to transmit power to the electrical machine 110;
- a ring gear 8 secured to a housing 4C of the power transmission 4;
- one or more planetary gears 9 placed inside the planet carrier 6 interposed between and meshing with the sun gear 7 and the ring gear 8.

Example 15: A motor vehicle comprising an apparatus 1 as in any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure. Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to. In addition, when the term "about" or "substantial" or "substantially" is used herein, it has to be understood as encompassing an actual variation of plus or minus 5% with respect to a reference value/position.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An apparatus (1) for transmitting power from a power generating device (100) to an electrical machine (110) suitable to be installed onboard a motor vehicle, the apparatus (1) comprising at least:
- a power take-off, PTO, device (2) which comprises a gear wheel (3) which is suitable to receive rotary power from the power generating device (100);
- a power transmission (4) which is suitable to receive rotary power from said gear wheel (3) and to transfer at least part of the received rotary power to the electrical machine (110);
- a decoupler (10) that is interconnected between and transfers rotary power from the gear wheel (3) in input to the power transmission (4), wherein the decoupler (10) is at least partially fitted inside said gear wheel (3) and reduces the torque amplitude transmitted in input to the power transmission (4) relative to the torque amplitude received in input by the gear wheel (3) from the power generating device (100).

2. The apparatus (1) of claim 1, wherein the decoupler (10) is substantially completely fitted inside said gear wheel (3).

3. The apparatus (1) of any of claims 1-2, wherein the power transmission (4) comprises a planetary gear set (5) suitable to transmit to the electrical machine (110) at least part of the rotary power received from the gear wheel (3) via the decoupler (10), wherein the planetary gear set (5) comprises at least a planet carrier (6) rotatably mounted around a rotation axis (X), and wherein the decoupler (10) is mechanically fixed to and rotates substantially synchronously with the planet carrier (6).

4. The apparatus (1) of any of claims 1-3, wherein the decoupler (10) comprises at least one torsional spring (20) having one end connected to the gear wheel (3) and the opposite end connected to an input part (4A) of the power transmission (4).

5. The apparatus (1) of claim 4, wherein the at least one torsional spring (20) has a stiffness which gives a torsional system resonance frequency lower than the main rotational excitation frequency in the system.

6. The apparatus (1) of any of claims 1-5, wherein the decoupler (10) comprises a torsional damper (21) having one end connected to the gear wheel (3) and the opposite end connected to an input part (4A) of the power transmission (4).

7. The apparatus (1) of any of claims 1-3, wherein the decoupler (10) comprises or is constituted by a rubber element having an outer part (22) connected to an inner surface (3A) of the gear wheel (3) and an inner part (23) fitted over an input part (4A) of the power transmission (4).

8. The apparatus (1) of any of claims 1-3, wherein the decoupler (10) comprises a first disc (24) mechanically attached to the gear wheel (3) and a second disc (25) mechanically attached to an input part (4A) of the power transmission (4), wherein the first disc (24) and the second disc (25) are positioned inside a cavity (26) at least partially filled with a viscous fluid (27).

9. The apparatus (1) of any of claims 1-3, wherein the power transmission (4) comprises an input splined shaft (4A), and wherein the decoupler (10) comprises a first part (28) fixed to and solidly rotating with the gear wheel (3), and a sliding member (28) which is coaxially mounted around and mechanically connected to the splined shaft (29), wherein the sliding member (29) and the first part (28) mechanically interface to each other along an interface 32 which is configured to keep coupled together the sliding member (29) and the first part (28) when rotating around a reference axis (X), while allowing the sliding member (29) to slide along the reference axis (X) relative to the first part (28).

10. The apparatus (1) of claim 9, wherein it further comprises a spring (31) which is mounted over the splined shaft (29) and opposes the axial movement of the sliding member (29) along the reference axis (X) away from the fixed part (28).

11. The apparatus (1) of claim 3, wherein the decoupler (10) comprises a flange-shaped element (11) which is fitted over an outer surface of and is solidly rotating with the planet carrier (6) around the rotation axis (X).

12. The apparatus (1) of claim 11, wherein the decoupler (10) comprises a further element (12) which is interposed between the flange-shaped element (11) and the gear wheel (3).

13. The apparatus (1) of claim 12, wherein said further element (12) comprises or is formed by a disc-shaped body which is mounted over a portion of the flange-shaped element (11) and is partially inserted within the gear wheel (3).

14. The apparatus of claim 3, wherein the planetary gear set (5) further includes:
- a sun gear (7) that is suitable to be coaxially secured to an output shaft suitable to transmit power to the electrical machine (110);
- a ring gear (8) secured to a housing (4C) of the power transmission (4);
- one or more planetary gears (9) placed inside the planet carrier (6) interposed between and meshing with the sun gear (7) and the ring gear (8).

15. A motor vehicle comprising an apparatus (1) as in any one of the preceding claims.
